# EUROPEAN PATENT SPECIFICATION

(11) **EP 2 850 452 B1**
(45) Date of publication and mention of the grant of the patent: **15.04.2020**
(21) Application number: 13782827.3
(22) Date of filing: 15.05.2013
(51) Int. Cl.: G01S 11/14, A01K 73/04

(54) **ACOUSTIC DISTANCE MEASURING FOR A TRAWL**
AKUSTISCHE DISTANZMESSUNG FÜR EIN SCHLEPPNETZ
MESURE DE DISTANCE ACOUSTIQUE POUR CHALUT

(30) Priority: 16.05.2012 NO 20120576
(43) Date of publication of application: 25.03.2015
(73) Proprietor: Scantrawl a.s., 3167 Åsgårdstrand (NO)
(72) Inventor: SKJOLD-LARSEN, Henning, N-3167 Åsgårdstrand (NO)
(74) Representative: Onsagers AS
(86) International application number: PCT/IB2013/053961
(87) International publication number: WO 2013/171686

(56) References cited:
- EP-A1- 0 446 111
- FR-A- 1 597 534
- GB-A- 892 690
- US-A- 5 214 617
- US-B1- 6 532 192

## Description

The invention relates to a method for determining distance between a vessel and at least one sensor module arranged on fishing gear being towed by the vessel.

A number of sensor modules are available for use in connection with fishing gear. Examples of such modules are; symmetry sensor, Trawl Eye sensor, trawl sounder, trawl speed sensor, distance sensor, grid sensor, depth sensor, quantity sensor etc. The modules may also comprise several of these functions in the same module. These modules provide information regarding the position of the fishing gear relative to the seabed, its speed, its direction of movement in relation to water flow, the volume of fish inside the fishing gear, etc.

Measurement of distances between modules, for example, sensor modules under water, and a reference point, which, for example, is a vessel pulling the sensor modules behind it, has been a well-known problem complex that has often been solved by measuring the length of the line or wire that runs between vessel and sensor modules. An alternative may be to transmit an acoustic signal from a reference point to a sensor module, and then measure the time it takes to receive a responding signal from the sensor module.

Accurate measurement of the line length has been found to be difficult in practice since the line may stretch, sag or twist. This applies whether the length of line is measured manually as it leaves the vessel, or whether the number of rotations a winch has made in paying out and adjusting a certain length of line is measured. The last-mentioned is, furthermore, dependent on how the line has been coiled up, which may be different from one time to another. The problem is exacerbated when the distance between the sensor modules and the vessel becomes substantial, i.e., several hundred metres. A line or wire will then be able to stretch to a relatively large extent and become longer than when it is coiled up.

Today there are different devices for measuring distances under water using a measuring principle comprising transmission and reception of sound waves. This primarily comprises use of sonar or echo sounders.

The principle of these devices is to emit a sound wave and measure the time it takes before the same sound wave is reflected. To find the distance from, for example, a vessel to one or more sensor modules, the sonar principle may be used, by emitting a sound wave from the vessel and receiving reflections or transmitted signals from sensor modules being towed behind the vessel. The time sound waves take to pass to or from the sensor modules will then be proportional to the distance between them and the vessel. The last-mentioned principle is also used to find distance between two or more sensor modules under water.

EP 0446111 describes a system for acoustic positioning of a trawl which is towed by a boat, by means of a transmitter on the trawl sending acoustic signals to a receiver at the ship. Each transmitter is synchronized with a main clock at the ship. US6532192 relates to a positioning system for use in underwater surveying and positioning applications. However, this is relatively complicated and costly, as it requires extra equipment and both a transmitter, receiver and two-way hydrophone on the vessel and a transmitter and receiver in a transponder on the sensor module.

It is in many cases desirable that distance determination should be effected solely by transmitting signals one way, from the sensor modules to a reference point that has a hydrophone to capture the signals. In this case, there arises a problem, which is that it is not known when signals from the sensor modules were transmitted, and it will thus be difficult to find the distance between sensor modules and reference point.

The object of the invention is to provide a system and a method for determining the distance between a vessel and sensor modules arranged on fishing gear being towed by the vessel, which are inexpensive, simple and reliable.

The object of the invention is achieved with the aid of the features set forth in the patent claims.

In an embodiment, a method for determining distance between a vessel and at least one sensor module arranged on fishing gear being towed by the vessel, the at least one sensor module comprising a transmitter connected to a clock and a receiver connected to a clock being arranged on the vessel, comprises the following steps:
- time-synchronising the clocks connected to transmitter and receiver with each other;
- transmitting a series or sequence of signals from the transmitter at a predetermined fixed time interval;
- receiving at the receiver the signals from the transmitter;
and, on the basis of the time of the reception of the signals, calculating the distance between the transmitter and the receiver.

The sensor modules may, for example, be catch sensors, which are sensor modules for use in connection with fishing gear. They comprise in many embodiments an outer main body that contains a sensor device for measuring different values, and fastening devices for attaching the main body to the fishing gear. The sensor device is either completely encased in the main body, arranged on the surface of the main body or partly contained within the main body.

The sensor modules are as a rule secured to the fishing gear by means of wires, elastic cords or rope, one end of the wire, elastic cord or rope being fastened to the fishing gear and the other end being fastened to the fastening devices. Depending on the type of sensor module, two or more wires, elastic cords or ropes will be used.

On the vessel, in addition to the receiver, there may be provided a system connected to the receiver for processing received signals and optionally displaying data. The system may, for example, comprise a monitor or screen for display of data. The system may further comprise a communications system for transmitting signals between sensor devices and a processing unit. In an embodiment, the communications system comprises one or more hydrophones, but other wireless communication or communication over one or more cables may also be used. The processing unit may be arranged on the vessel, for example, in a bridge system in a catch monitoring system. Such a catch monitoring system may, for example, consist of receiver units, display units/monitors, hydrophones and one or more sensors/sensor modules such as trawl sensors, door sensors, bottom contact sensors, flow sensors, Trawl Eye sensor, symmetry sensor, trawl sounder etc. The processing unit may be connected to other units and be capable of controlling these units, as, for instance, winches, propeller pitch, rudder, engine speed, and angles of trawl doors and weights/clumps.

When the clocks connected to the transmitter and receiver are time-synchronised with each other, they will run synchronously after synchronisation, i.e., that at the same time they show the same value. When the transmitter transmits a series of signals to the receiver, the receiver will be able to calculate the distance to the transmitter. For example, the signal from the transmitter may contain time information for identifying the time at which the signal is transmitted. The length of time between transmission and reception of the signal can then be identified. When the speed of sound in water is known, the distance between transmitter and receiver can be calculated. In an embodiment, the receiver or a processing unit connected to the receiver registers change in the time interval between the signals received from the transmitter and can calculate change in distance between transmitter and receiver.

In an embodiment, the time synchronisation of the clocks on the vessel is carried out before the sensor modules are deployed in the sea. In other embodiments, the synchronisation of the clocks can be carried out after the sensors have been deployed in the sea, for example, in that a synchronisation signal is sent simultaneously to transmitter and receiver. In an embodiment, the synchronisation is triggered as the sensor module is deployed in the sea, in that on contact with water it begins to transmit. If the distance to the receiver is known, the clock can be synchronised based on the known distance and received signals.

In an embodiment, the sensor module may comprise measuring modules for measuring the state of the sensor module, such as its depth in the sea, distance to other sensor modules, angular position etc. Additional sensors for measuring, for example, temperature or salt content in the water can also be contained within the module. The predetermined fixed time interval can, in an embodiment, be corrected by using measured data from one or more sensor modules, for example, by taking into account/correcting for the speed of sound in water at the measured temperature. Measured data from the measuring sensors may also be used in calculating distance.

The invention will now be described in more detail with the aid of examples and with reference to the attached figures.
Figure 1 illustrates a vessel towing a twin trawl.
Figure 2 illustrates distance measurements for a trawl.

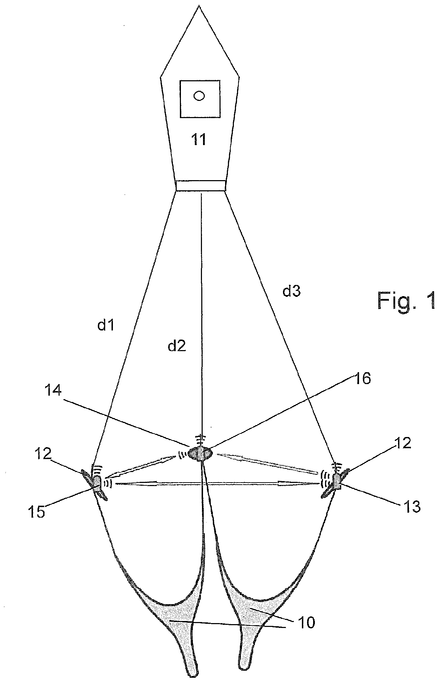

Figure 1 illustrates a vessel 11 towing a twin trawl consisting of two trawls 10, two trawl doors 12 (a first and a second door), and a centre clump 14. Sensor modules 15, 13 are arranged on the doors 12 whilst a sensor module 16 is arranged on the clump 14. The sensor modules comprise means for transmitting acoustic signals, and can in some cases also comprise means for receiving signals, several types of sensor devices and other desired tools. The sensor module 15 on the port trawl door may, for example, be a double distance sensor capable of transmitting an acoustic signal and calculating the distance based on the length of time it takes from when the acoustic signal is transmitted until a signal is received from the transponder on the clump 14 and the starboard trawl door 12. In addition, the sensor module 15 may comprise further sensors. Examples of sensors that can be included in the sensor modules 15, 16 and 13 are depth sensors and temperature sensors.

In this configuration, it may be of interest to determine the distances d1, d2 and d3 between the sensor modules 15, 16, 13 and the vessel 11.

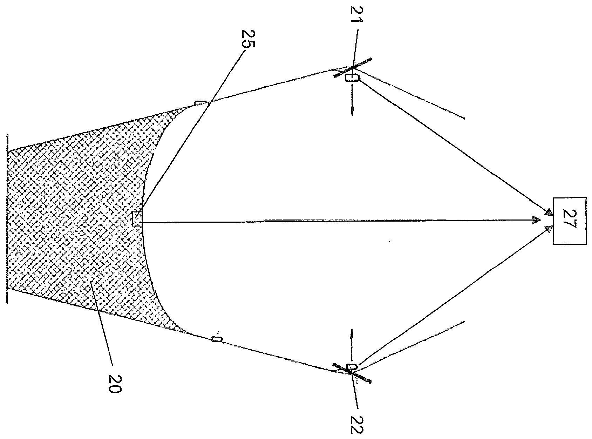

Figure 2 illustrates schematically how transmission of signals from a sensor module and reception of the signals by a receiver can be used to determine the distance between the sensor module and the receiver. In the figure, five sensor modules 21, 22 and 25 are arranged in different positions on a trawl 20. The sensor modules 21, 22 may, for example, be door angle sensors and/or distance sensors, and the sensor module 25 may, for instance, be a symmetry sensor. There may be a need to determine the distance between one or more of the sensor modules and the vessel towing the trawl. On the vessel is provided a receiver 27, for example, a hydrophone able to receive signals transmitted from transmitters on or in one or more of the sensor modules.

Each of the sensor modules that is adapted to be able to determine the distance to the vessel comprises a transmitter and a clock connected to the transmitter, and the receiver is also connected to a clock. The clocks connected to the transmitter and receiver are synchronised with each other such that they show the same time at the same instant.

When, for example, the distance between a door sensor module 21 and the receiver 27 on the vessel is to be determined, a series of signals are transmitted from a transmitter in sensor module 21, the signals being transmitted at a predetermined fixed time interval. The signals are received in the receiver 27 and the time of the reception is registered. On the basis of the time from the receiver 27, information regarding the distance between transmitter and receiver can be calculated. In some cases, the transmitted signal contains information regarding the time of transmission or information that in some other way identifies the time of transmission, such as a signal number or the like. In other cases, the time of the reception will be registered and monitored, and a variation in time interval between received signals will indicate a change in the distance between transmitter and receiver. This change in distance can then be calculated.

The distance can be calculated based on information regarding the speed of sound in water when the signal is an acoustic signal. As the speed of sound in water varies with temperature, measurements of the water temperature can be used to correct the distance calculated.

## Claims

1. A method for determining distance between a vessel (11) and at least one sensor module arranged on fishing gear (10) being towed by the vessel, the at least one sensor module (13, 15, 16) comprising a transmitter connected to a clock and a receiver connected to a clock being arranged on the vessel, wherein the method comprises the following steps:
- time-synchronising the clocks connected to transmitter and receiver with each other; ***characterized in* that** it further comprises
- transmitting a series of signals from the transmitter at a predetermined, fixed time interval between each transmitted signal of the series;
- receiving in the receiver the series of signals from the transmitter;
and, on the basis of the time of the reception of the signals, calculating the distance between the transmitter and the receiver.

2. A method according to claim 1, wherein the time synchronisation of the clocks is carried out on the vessel before the sensor modules are deployed in the sea.

3. A method according to claim 1, wherein the time synchronisation of the clocks is carried out after the sensor modules have been deployed in the sea.

4. A method according to claim 1, wherein the sensor module comprises measuring sensors for measuring the state of the sensor module, such as its depth in the sea, distance to other sensor modules.

5. A method according to claim 4, wherein the predetermined fixed time interval is corrected by using measured data from one or more sensor modules.

6. A method according to claim 4, wherein the measured data from measuring sensors are used for calculating distance.

7. A method according to one of the preceding claims, comprising measuring the temperature of the water and where calculation of distance is corrected by taking into account the speed of sound at the measured temperature.

8. A method according to claim 1, wherein the series of signals transmitted from the transmitter comprises a time signal.

## Patentansprüche

1. Verfahren zum Bestimmen von Abstand zwischen einem Schiff (11) und wenigstens einem Sensor-Modul, das an von dem Schiff geschleppten Fanggerät (10) angeordnet ist, wobei das wenigstens eine Sensor-Modul (13, 15, 16) einen mit einer Uhr verbundenen Sender sowie einen mit einer Uhr verbundenen Empfänger umfasst, der an dem Schiff angeordnet ist, und das Verfahren die folgenden Schritte umfasst:
- zeitliches Synchronisieren der mit Sender und Empfänger verbundenen Uhren; **dadurch gekennzeichnet, dass** es des Weiteren umfasst:
- Senden einer Reihe von Signalen von dem Sender in einem vorgegebenen festen Zeitintervall zwischen jedem übertragenen Signal der Reihe;
- Empfangen der Reihe von Signalen von dem Sender an dem Empfänger; und
Berechnen des Abstandes zwischen dem Sender und dem Empfänger auf Basis des Zeitpunktes des Empfangs der Signale.

2. Verfahren nach Anspruch 1, wobei die Zeitsynchronisation der Uhren an dem Schiff ausgeführt wird, bevor die Sensor-Module im Meer ausgebracht werden.

3. Verfahren nach Anspruch 1, wobei die Zeitsynchronisation der Uhren ausgeführt wird, nachdem die Sensor-Module im Meer ausgebracht worden sind.

4. Verfahren nach Anspruch 1, wobei das Sensor-Modul Mess-Sensoren umfasst, mit denen der Zustand des Sensor-Moduls, beispielsweise seine Tiefe im Meer, Entfernung zu anderen Sensor-Modulen, gemessen wird.

5. Verfahren nach Anspruch 4, wobei das vorgegebene feste Zeitintervall unter Verwendung von Messdaten von einem oder mehreren Sensor-Modul/en korrigiert wird.

6. Verfahren nach Anspruch 4, wobei die Messdaten von Mess-Sensoren zum Berechnen von Abstand verwendet werden.

7. Verfahren nach einem der vorangehenden Ansprüche, das umfasst, dass die Temperatur des Wassers gemessen wird, und wobei Berechnung von Abstand unter Berücksichtigung der Schallgeschwindigkeit bei der gemessenen Temperatur korrigiert wird.

8. Verfahren nach Anspruch 1, wobei die von dem Sender gesendete Reihe von Signalen ein Zeitsignal umfasst.

## Revendications

1. Procédé de détermination d'une distance entre un navire (11) et au moins un module de capteur agencé sur un engin de pêche (10) qui est remorqué par le navire, l'au moins un module de capteur (13, 15, 16) comprenant un émetteur connecté à une horloge et un récepteur connecté à une horloge étant agencé sur le navire, dans lequel le procédé comprend les étapes suivantes :
- la synchronisation temporelle des horloges connectées à l'émetteur et au récepteur l'une avec l'autre ; **caractérisé en ce qu'**il comprend en outre
- la transmission d'une série de signaux depuis l'émetteur à un intervalle de temps fixe prédéterminé entre chaque signal transmis de la série ;
- la réception, dans le récepteur, de la série de signaux en provenance de l'émetteur ;
et, sur la base du temps de la réception des signaux, le calcul de la distance entre l'émetteur et le récepteur.

2. Procédé selon la revendication 1, dans lequel la synchronisation temporelle des horloges est réalisée sur le navire avant que les modules de capteur ne soient déployés dans la mer.

3. Procédé selon la revendication 1, dans lequel la synchronisation temporelle des horloges est réalisée après que les modules de capteur ont été déployés dans la mer.

4. Procédé selon la revendication 1, dans lequel le module de capteur comprend des capteurs de mesure pour mesurer l'état du module de capteur, comme sa profondeur dans la mer ou sa distance à d'autres modules de capteur.

5. Procédé selon la revendication 4, dans lequel l'intervalle de temps fixe prédéterminé est corrigé par l'utilisation de données mesurées provenant d'un ou plusieurs modules de capteur.

6. Procédé selon la revendication 4, dans lequel les données mesurées provenant de capteurs de mesure sont utilisées pour le calcul de distance.

7. Procédé selon l'une des revendications précédentes, comprenant la mesure de la température de l'eau et où le calcul de distance est corrigé par la prise en compte de la vitesse du son à la température mesurée.

8. Procédé selon la revendication 1, dans lequel la série de signaux transmis depuis l'émetteur comprend un signal de temps.
